# NOUVEAU FASCICULE DE BREVET EUROPEEN

(11) **EP 0 566 474 B2**
(45) Date de publication et mention de la décision concernant l'opposition: **15.11.2000**
(45) Mention de la délivrance du brevet: 27.11.1996
(21) Numéro de dépôt: 93400955.6
(22) Date de dépôt: 13.04.1993
(51) Int. Cl.: B60H 1/24, B60S 1/54

(54) **Dispositif de chauffage-ventilation et/ou de climatisation de l'habitacle d'un véhicule automobile**
Heizungs-, Belüftungs- und/oder Klimatisierungsvorrichtung für den Innenraum von Kraftfahrzeugen
Heating, ventilation and/or conditioning device for a motor vehicle interior

(30) Priorité: 16.04.1992 FR 9204711
(43) Date de publication de la demande: 20.10.1993
(73) Titulaire: VALEO CLIMATISATION, 78321 La Verrière (FR)
(72) Inventeur: Danieau, Jacques, F-78590 Noisy-Le-Roi (FR)
(74) Mandataire: Gamonal, Didier

(56) Documents cités:
- EP-A- 0 291 397
- DE-U- 1 807 808
- DE-U- 1 934 891
- US-A- 4 109 562
- US-A- 4 467 706

## Description

L'invention concerne un dispositif de chauffage-ventilation et/ou de climatisation de l'habitacle d'un véhicule automobile.

On connaît déjà des dispositifs de ce type qui comprennent des moyens de distribution pour envoyer de l'air vers différentes zones de l'habitacle, en particulier vers le pare-brise et les glaces latérales, ainsi que des moyens de réglage de la température de l'air distribué dans l'habitacle.

Dans un véhicule automobile classique, il est prévu une planche de bord qui s'étend sous le pare-brise et sur toute la largeur de l'habitacle et qui regroupe notamment le tableau de bord avec ses cadrans et voyants, ainsi que différents organes de commande, la boîte à gants, etc.

Généralement, le dispositif de chauffage-ventilation et/ou de climatisation d'un tel véhicule comprend une buse de dégivrage/désembuage du pare-brise située au milieu de la planche de bord et deux buses de dégivrage/désembuage des glaces latérales, situées respectivement aux deux extrémités de la planche de bord.

En outre, le dispositif comprend, de manière habituelle, au moins un aérateur central prévu au milieu de la planche de bord ainsi que des aérateurs latéraux prévus aux extrémités de la planche de bord. Par ailleurs, au moins une buse de chauffage débouche vers la partie inférieure de l'habitacle pour assurer le chauffage dans la zone des pieds des passagers.

Dans les dispositifs connus du type précité, sont prévus en outre différents moyens pour agir sur la distribution et la répartition de l'air envoyé dans l'habitacle, ainsi que des moyens pour le réglage de la température de cet air. Celui-ci peut être envoyé dans l'habitacle, soit sans modification de température, soit après réchauffage, soit encore après refroidissement si le véhicule est équipé d'une installation de climatisation.

Dans ces conditions, les dispositifs de chauffage-ventilation et/ou climatisation sont particulièrement complexes du fait qu'ils nécessitent un grand nombre de composants logés en différents endroits du véhicule et, notamment, en différents endroits de la planche de bord.

Ils ont en outre l'inconvénient d'être encombrants puisqu'ils font saillie dans l'habitacle, notamment à partir de la planche de bord.

Il est également connu par le document EP-A-0291397 un tel dispositif qui constitue un ensemble monobloc propre à être implanté verticalement sous le pare-brise, au mains en partie dans une région médiane de l'habitacle, cet ensemble comportant une buse unique de dégivrage/désembuage, débouchant sous le pare-brise et munie d'un diffuseur pour répartir l'air vers le pare-brise et les glaces latérales.

Il en résulte que ces dispositifs connus ne peuvent convenir qu'à des véhicules dont l'habitacle est d'un volume suffisamment grand.

C'est, en conséquence, l'un des buts de l'invention de procurer un dispositif de chauffage-ventilation et/ou climatisation, du type défini en introduction, qui est de conception simple et qui possède un faible encombrement.

C'est aussi un but de l'invention de procurer un tel dispositif qui peut être implanté dans des véhicules de faible gabarit, à habitacle réduit, tels que des véhicules à vocation essentiellement urbaine, notamment des véhicules à propulsion électrique.

L'invention propose un dispositif de chauffage-ventilation et/ou de climatisation de l'habitacle d'un véhicule automobile, du type défini en introduction, dans lequel la buse de dégivrage/désembuage comprend une ouverture de sortie, de forme oblongue, caractérisé en ce que le diffuseur comprend une multiplicité de canaux adjacents qui ont des directions d'écoulement divergentes vers l'ouverture de sortie, et en ce que l'ensemble monobloc est implanté tant entier dans la région médiane et comprend en outre un bloc d'aération situé sous la buse unique de dégivrage/désembuage, s'étendant horizontalement en saillie dans l'habitacle, et ayant deux buses d'aération propres à envoyer de l'air respectivement du côté droit et du côté gauche de l'habitacle, et en ce que les deux buses d'aération (64) ont des grilles respectives adjacentes (66) formant ensemble une configuration sensiblement semi-circulaire d'axe vertical.

On peut ainsi envoyer de l'air froid ou réchauffé au moyen de deux buses situées dans la région centrale de l'habitacle sans qu'il soit nécessaire de prévoir des buses latérales.

On obtient ainsi un dispositif particulièrement compact pouvant être implanté facilement dans un véhicule automobile et groupant tous les moyens de distribution et moyens de réglage nécessaires à son fonctionnement.

De plus, ce dispositif peut être installé à bord d'un véhicule dépourvu de planche de bord, de manière à procurer un gain de place appréciable dans un véhicule dont l'habitacle possède déjà un volume réduit.

Le dispositif de l'invention peut donc être implanté dans un véhicule de faible gabarit tel qu'un véhicule à vocation essentiellement urbaine, propulsée de préférence par un moteur électrique, ou encore par un moteur à combustion interne de faible cylindrée.

En outre, la buse unique de dégivrage/désembuage permet d'émettre un flux d'air divergent, pouvant balayer toute la surface interne du pare-brise et au moins une partie des surfaces internes des glaces latérales qui se situent à la jonction du pare-brise.

Avantageusement, les canaux du diffuseur sont délimités par deux parois communes opposées et par une multiplicité d'ailettes reliant les deux parois communes et allant en s'évasant vers l'ouverture de sortie.

Selon une autre caractéristique de l'invention, l'ensemble monobloc comprend en outre un bloc d'aération situé sous la buse unique de dégivrage/désembuage et s'étendant horizontalement en saillie dans l'habitacle, ce bloc d'aération comportant deux buses d'aération propres à envoyer de l'air respectivement du côté droit et du côté gauche de l'habitacle.

On peut ainsi envoyer de l'air froid ou réchauffé au moyen de deux buses situées dans la région centrale de l'habitacle, sans qu'il soit nécessaire de prévoir des buses latérales.

Avantageusement, les deux buses d'aération comportent des grilles respectives adjacentes ayant ensemble une configuration sensiblement semi-circulaire, d'axe vertical.

Selon une autre caractéristique de l'invention, il est prévu un organe de commande situé entre les deux grilles des buses d'aération pour permettre le réglage du débit d'air au travers desdites grilles.

Selon une autre caractéristique de l'invention, le bloc d'aération comporte une paroi supérieure sensiblement horizontale, au travers de laquelle débouchent deux aérateurs orientables.

De façon avantageuse, le dispositif de l'invention comprend aussi deux buses de chauffage débouchant en partie inférieure, respectivement du côté droit et du côté gauche de l'habitacle.

On peut ainsi assurer le chauffage des pieds des passagers, toujours à partir du même ensemble monobloc.

Selon une autre caractéristique de l'invention, le dispositif comprend une paroi frontale logeant un tableau portant des organes de commande.

L'ensemble monobloc de l'invention possède avantageusement une configuration symétrique par rapport à un plan médian, ce qui lui permet d'être implanté indifféremment dans un véhicule à conduite à droite ou dans un véhicule à conduite à gauche.

Dans la description qui suit, faite seulement à titre d'exemple, on se réfère aux dessins annexés, sur lesquels :
- la figure 1 est une vue en perspective d'un dispositif selon l'invention, implanté dans un véhicule représenté partiellement ;
- la figure 2 est une vue schématique de dessus montrant les régions du pare-brise et des glaces latérales balayées par l'air issu de la buse unique de dégivrage/désembuage ;
- la figure 3 est une vue en élévation du dispositif de la figure 1 ;
- la figure 4 est une vue de dessus du dispositif des figures 1 et 3 ;
- la figure 5 est une vue en perspective partielle, avec arrachement, du diffuseur équipant le dispositif de la figure 1 ; et
- la figure 6 est une vue en coupe transversale, à échelle agrandie, suivant la ligne VI-VI de la figure 4.

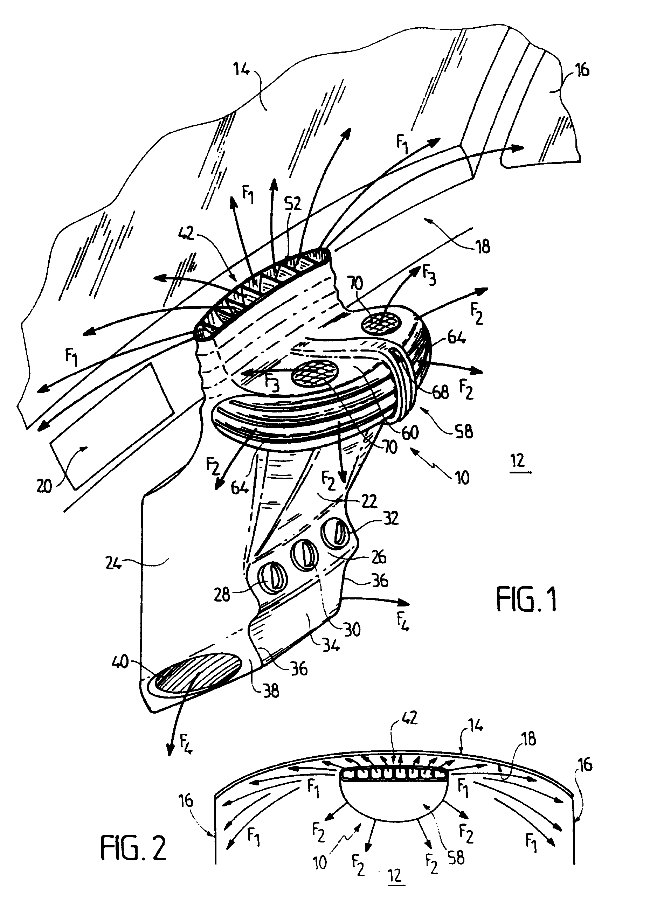

On se réfère tout d'abord à la figure 1 qui représente un dispositif de chauffage-ventilation et/ou de climatisation réalisé sous la forme d'un ensemble monobloc 10 implanté dans l'habitacle 12 d'un véhicule automobile. Ce dernier comprend en outre (figures 1 et 2) un pare-brise 14, deux glaces latérales 16 et un bandeau 18 s'étendant sous le pare-brise et sur toute la largeur de l'habitacle. Ce bandeau remplace ici la planche de bord traditionnelle et supporte simplement un tableau de bord 20 (figure 1) qui, dans l'exemple, est situé du côté gauche de l'habitacle.

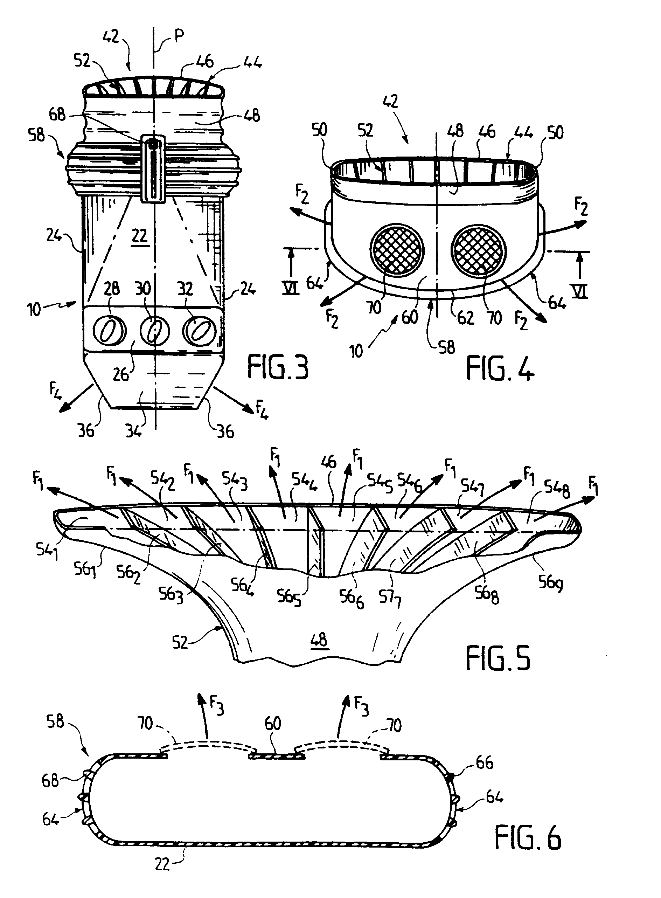

L'ensemble monobloc 10 est propre à être implanté verticalement sous le pare-brise 14 et dans une région médiane de l'habitacle. Cet ensemble monobloc possède une configuration symétrique par rapport à un plan médian P (figure 3) qui coïncide avec le plan longitudinal médian du véhicule lorsque l'ensemble monobloc est installé dans celui-ci.

L'ensemble monobloc regroupe tous les moyens de distribution et de répartition d'air ainsi que tous les moyens de réglage de température nécessaires au fonctionnement du dispositif.

Comme montré plus particulièrement aux figures 1 et 3, l'ensemble monobloc 10 constitue une colonne pouvant être implantée suivant une disposition générale verticale. L'ensemble 10 possède un habillage, de forme symétrique, par rapport au plan P. Il comporte une paroi frontale 22 s'étendant obliquement vers le bas et se raccordant à deux parois latérales opposées 24, situées respectivement du côté droit et du côté gauche de l'habitacle. La paroi frontale 22 loge, en partie inférieure, un tableau de commande 26 comportant trois boutons de commande 28, 30 et 32, du type rotatif. Le bouton 28 peut servir par exemple au réglage de la température de l'air, le bouton 30 au réglage de la vitesse du ventilateur et le bouton 32 au réglage de la répartition du débit d'air entre les différentes buses.

La paroi 22 se prolonge ensuite vers le bas par une paroi 34 de forme trapézoïdale présentant deux arêtes obliques 36 le long desquelles se raccordent respectivement deux parois inclinées 38. Chacune des parois 38 est traversée par une buse de chauffage 40 débouchant, l'une du côté gauche et l'autre du côté droit de l'habitacle.

L'ensemble monobloc 10 comporte, en partie supérieure, une buse unique 42 qui débouche sous le pare-brise 14 pour permettre le dégivrage/désembuage du pare-brise 14 et des deux glaces latérales 16. Cette buse unique 42 comprend une ouverture de sortie 44 (figures 1 à 4) de forme oblongue dont la plus grande dimension s'étend parallèlement au pare-brise. La buse 42 est limitée par deux parois principales opposées 46 et 48 et deux parois opposées 50 de forme incurvée qui prolongent respectivement les deux parois 24 (figure 4).

Dans l'espace ainsi défini par les deux parois 46 et 48 et par les deux parois 50, est logé un diffuseur 52 comprenant une multiplicité de canaux adjacents 54₁-54₈ qui ont des directions d'écoulement divergentes vers l'ouverture de sortie 44. Les canaux 54₁-54₈ sont délimités par les deux parois 46 et 48 qui leur sont communes et par une multiplicité d'ailettes 56₁ à 56₉ qui relient les parois communes 46 et 48 et qui vont en s'évasant vers l'ouverture de sortie (figure 5). Les canaux 54₁ à 54₈ permettent de canaliser l'air comme montré par les flèches F1 (figures 1, 2 et 5) de manière à obtenir un flux d'écoulement s'évasant pour atteindre le pare-brise 14 et les deux glaces latérales 16.

L'ensemble monobloc 10 comprend en outre un bloc d'aération 58 (figures 1 à 4 et 6) qui est situé sous la buse 42 et qui s'étend horizontalement en saillie dans l'habitacle. Le bloc 58 est limité, en partie supérieure, par une paroi supérieure 60, sensiblement horizontale, qui se raccorde en partie inférieure de la paroi 48. La paroi 60 se raccorde, le long d'un pourtour 62, de forme générale semi-circulaire, à deux buses d'aération 64 qui s'étendent symétriquement de part et d'autre du plan P. Les buses 64 ont des grilles respectives adjacentes 66 formant ensemble une configuration sensiblement semi-circulaire d'axe vertical. Les buses 64 sont destinées à envoyer de l'air dans la direction des passagers, respectivement du côté droit et du côté gauche de l'habitacle.

Le bloc d'aération 58 comprend en outre un organe de commande 68 situé entre les deux grilles 66 pour régler le débit d'air au travers de ces grilles. Dans l'exemple, l'organe de commande 68 est un bouton coulissant dans le plan vertical P. Les deux buses 64 permettent d'envoyer de l'air du côté droit et du côté gauche de l'habitacle, comme représenté par les flèches F2 (figures 1 et 4).

De façon facultative, le bloc 58 peut comprendre en outre deux aérateurs orientables 70 formés au travers de la paroi supérieure 60. Ces aérateurs sont destinés principalement à diriger des flux d'air vers le sommet de l'habitacle, comme montré par les flèches F3 sur les figures 1 et 6.

Les buses de chauffage 40, prévues en partie inférieure de l'ensemble monobloc 10, permettent d'envoyer des flux d'air en partie inférieure de l'habitacle dans la région des pieds des passagers, respectivement du côté droit et du côté gauche, comme montré par les flèches F4 (figures 1 et 3).

On comprendra que l'ensemble monobloc 10 peut être facilement installé à l'intérieur d'un véhicule automobile d'habitacle réduit et dépourvu de planche de bord. Il constitue ainsi un ensemble monobloc d'encombrement réduit regroupant tous les moyens de distribution et de réglage nécessaires à son fonctionnement et permettant une distribution de l'air à partir d'un organe unique.

## Revendications

1. Dispositif de chauffage-ventilation et/ou de climatisation de l'habitacle d'un véhicule automobile, comprenant des moyens de distribution pour envoyer de l'air vers différentes zones de l'habitacle, en particulier vers le pare-brise et les glaces latérales, ainsi que des moyens de réglage de la température de l'air distribué dans l'habitacle, ledit dispositif constituant un ensemble monobloc (10) propre à être implanté verticalement sous le pare-brise (14), au mains en partie dans une région médiane de l'habitacle, cet ensemble comportant une buse unique de dégivrage/désembuage (42), débouchant sous le pare-brise (14) et munie d'un diffuseur (52) pour répartir l'air vers le pare-brise (14) et les glaces latérales (16), dans lequel la buse de dégivrage/désembuage (42) comprend une ouverture de sortie (44), de forme oblongue, caractérisé en ce que le diffuseur (52) comprend une multiplicité de canaux adjacents (54₁-54₈) qui ont des directions d'écoulement divergentes vers l'ouverture de sortie, en ce que l'ensemble monobloc (10) est implanté tant entier dans la région médiane et comprend en outre un bloc d'aération (58) situé sous la buse unique de dégivrage/désembuage (42), s'étendant horizontalement en saillie dans l'habitacle, et ayant deux buses d'aération (64) propres à envoyer de l'air respectivement du côté droit et du côté gauche de l'habitacle, et en ce que les deux buses d'aération (64) ont des grilles adjacentes (66) formant ensemble une configuration sensiblement circulaire d'axe vertical.

2. Dispositif selon la revendication 1, caractérisé en ce que les canaux (54₁-54₈) sont délimités par deux parois communes opposées (46, 48) et par une multiplicité d'ailettes (56₁-56₉) reliant les deux parois communes et allant en s'évasant vers l'ouverture de sortie (44).

3. Dispositif selon l'une des revendications 1 et 2, caractérisé en ce que le bloc d'aération (58) comprend un organe de commande (68) situé entre les deux grilles (66) pour le réglage du débit d'air au travers des deux grilles.

4. Dispositif selon l'une des revendications 1 à 3, caractérisé en ce que le bloc d'aération (58) comprend une paroi supérieure (60) sensiblement horizontale au travers de laquelle débouchent deux aérateurs orientables (70).

5. Dispositif selon l'une des revendications 1 à 4, caractérisé en ce qu'il comprend deux bouches de chauffage (40) débouchant en partie inférieure de l'habitacle, respectivement du côté droit et du côté gauche.

6. Dispositif selon l'une des revendications 1 à 5, caractérisé en ce qu'il comprend une paroi frontale (22) logeant un tableau (26) portant des organes de commande (28, 30, 32).

7. Dispositif selon l'une des revendications 1 à 6, caractérisé en ce que l'ensemble monobloc (10) possède une configuration symétrique par rapport à un plan médian (P).

## Claims

1. Apparatus for the heating and ventilation and/or air conditioning of the cabin of a motor vehicle, comprising distribution means for delivering air towards different zones of the cabin, and in particular towards the windscreen and side windows, together with means for regulating the temperature of the air distributed into the cabin, the said apparatus constituting a monobloc unit (10) adapted to be fitted vertically below the windscreen (14), at least partly in a central region of the cabin, the said unit including a single de-icing and demisting vent (42) which is open below the windscreen, and which has a diffuser (52) for distributing the air towards the windscreen (14) and the side windows (16), wherein the de-icing and demisting vent (42) has an oblong outlet port (44), characterised in that the diffuser (52) comprises a multiplicity of adjacent ducts (54₁ - 54₈) which define divergent flow directions towards the outlet port, in that the monobloc unit (10) is located entirely in the central region and further includes a ventilator block (58) arranged below the single de-icing and demisting vent (42), projecting horizontally into the cabin and having two ventilating ports (64) for delivering air into the cabin on the right hand side and the left hand side respectively, and in that the two ventilating ports (64) have respective grids (66), adjacent to each other and together defining a configuration which is substantially semicircular with a vertical axis.

2. Apparatus according to Claim 1, characterised in that the ducts (54₁ - 54₈) are delimited by two opposed common walls (46, 48) and by a multiplicity of fins (56₁ - 56₉), which join the two common walls together and are flared outwardly towards the outlet port (44).

3. Apparatus according to Claim 1 or Claim 2, characterised in that the ventilator block (58) includes a control member (68) arranged between two grids (66) for regulating the flow of air through the two grids.

4. Apparatus according to one of Claims 1 to 3, characterised in that the ventilator block (58) has a substantially horizontal top wall (60), through which two orientatable ventilators (70) are open.

5. Apparatus according to one of Claims 1 to 4, characterised in that it includes two heating ports (40) which are open into the lower part of the cabin, on the right hand side and left hand side respectively.

6. Apparatus according to one of Claims 1 to 5, characterised in that it has a front wall (22) which includes a control panel (26) carrying control members (22, 30, 32).

7. Apparatus according to one of Claims 1 to 6, characterised in that the monobloc unit (10) has a configuration which is symmetrical with respect to a median plane (P).

## Patentansprüche

1. Vorrichtung zur Heizung-Ventilation und/oder Klimatisation der Fahrgastzelle eines Automobilfahrzeugs, umfassend Einrichtungen zur Verteilung, um Luft in unterschiedliche Zonen der Fahrgastzelle zu transportieren, insbesondere zur Windschutzscheibe und den Seitenfenstern, wie auch Einrichtungen zur Regelung der Temperatur der in der Fahrgastzelle verteilten Luft, wobei die Vorrichtung eine Monoblockanordnung (10) bildet, die geeignet ist, vertikal unter der Windschutzscheibe (14) eingesetzt zu werden, zumindest teilweise in einem mittleren Bereich der Fahrgastzelle, wobei die Anordnung eine einzige Düse zur Entfrostung/Entnebelung (42) umfaßt, die unter der Windschutzscheibe (14) mündet und mit einem Diffuser (52) ausgestattet ist, um die Luft zur Windschutzscheibe (14) und den Seitenscheiben (16) aufzuteilen, wobei die Düse zur Entfrostung/Entnebelung (42) eine Ausgangsöffnung (44) mit länglicher Form umfaßt, dadurch gekennzeichnet, daß der Diffuser (52) eine Mehrzahl von angrenzenden Kanälen (52₁-54₈) umfaßt, weiche Ausströmrichtungen haben, die zur Ausgangsöffnung hin divergieren, daß die Monoblockanordnung (10) vollständig in dem mittleren Bereich eingesetzt ist und andererseits einen Lüftungsblock (58) umfaßt, der unter der einzigen Düse zur Entfrostung/Entnebelung (42) angeordnet ist, sich horizontal in die Fahrgastzelle vorspringend erstreckt und zwei Lüftungsdüsen (64) hat, die geeignet sind, jeweils Luft zur rechten Seite und zur linken Seite der Fahrgastzelle zu transportieren, und daß die zwei Lüftungsdüsen (64) aneinandergrenzende Gitter (66) haben, die zusammen eine im wesentlichen kreisförmige Konfiguration zur vertikalen Achse bilden.

2. Vorrichtung nach Anspruch 1, dadurch gekennzeichnet, daß die Kanäle (54₁-54₈) durch zwei gemeinsame gegenüberliegende Wände (46, 48) begrenzt sind und durch eine Vielzahl von Flügeln (56₁-56₉), welche die zwei gemeinsamen Wände verbinden und unter Verbreiterung bis zur Ausgangsöffnung (44) gehen.

3. Vorrichtung nach einem der Ansprüche 1 und 2, dadurch gekennzeichnet, daß der Lüftungsblock (58) ein Steuerungsorgan (68) umfaßt, das zwischen den zwei Gittern (66) angeordnet ist, zur Regelung des Luftstromes durch die zwei Gitter.

4. Vorrichtung nach einem der Ansprüche 1 bis 3, dadurch gekennzeichnet, daß der Lüftungsblock (58) eine im wesentlichen horizontale obere Wand (60) umfaßt, durch die zwei ausrichtbare Ausströmer (70) münden.

5. Vorrichtung nach einem der Ansprüche 1 bis 4, dadurch gekennzeichnet, daß sie zwei Heizungsmündungen (40) umfaßt, die im unteren Teil der Fahrgastzelle jeweils auf der rechten Seite und der linken Seite münden.

6. Vorrichtung nach einem der Ansprüche 1 bis 5, dadurch gekennzeichnet, daß sie eine Vorderwand (22) umfaßt, die eine Tafel (26) aufnimmt, welche Steuerorgane (28, 30, 32) trägt.

7. Vorrichtung nach einem der Ansprüche 1 bis 6, dadurch gekennzeichnet, daß die Monoblockanordnung (10) eine bezüglich einer Mittelebene (P) symmetrische Konfiguration besitzt.
